# EUROPÄISCHE PATENTSCHRIFT

(11) **EP 0 405 163 B1**
(45) Veröffentlichungstag und Bekanntmachung des Hinweises auf die Patenterteilung: **05.05.1993**
(21) Anmeldenummer: 90110235.0
(22) Anmeldetag: 30.05.1990
(51) Int. Cl.: F16L 9/18, F16L 47/06, F16L 55/165

(54) **Kunststoffrohr zur Kanalrohrsanierung**
Plastic piping for ducting reconstruction
Tuyaux en matières plastiques pour rénovation de canalisations

(30) Priorität: 28.06.1989 DE 3921075
(43) Veröffentlichungstag der Anmeldung: 02.01.1991
(73) Patentinhaber: Hegler, Wilhelm, D-97688 Bad Kissingen (DE)
(72) Erfinder: Hegler, Wilhelm, D-8730 Bad Kissingen (DE); Hegler, Ralph-Peter, Dr., D-8730 Bad Kissingen (DE)
(74) Vertreter: Rau, Manfred, Dr. Dipl.-Ing.

(56) Entgegenhaltungen:
- EP-A- 0 211 428
- EP-A- 0 231 446
- EP-A- 0 275 055
- EP-A- 0 292 836
- EP-A- 0 385 465
- DE-A- 3 218 539
- DE-C- 3 906 752
- US-A- 4 867 203

## Beschreibung

Die Erfindung bezieht sich auf einen Rohr-Bausatz zur Kanalrohrsanierung, bestehend aus mindestens zwei Kunststoff-Rohren und mindestens einer Muffe zur Verbindung der Rohre, wobei jedes Rohr mindestens ein Spitzende aufweist, dessen Außendurchmesser kleiner ist als der Außendurchmesser des Rohres, wobei der Außendurchmesser der Muffe im wesentlichen gleich dem Außendurchmesser der Rohre ist, wobei der Innendurchmesser der Muffe etwa gleich dem Außendurchmesser jedes Spitzendes ist und wobei die Rohre und die Muffe in miteinander verbundenem Zustand eine gemeinsame Mittel-Längs-Achse aufweisen.

Es ist seit langem bekannt, daß das Kanalrohrnetz, das seit dem 19. Jahrhundert bevorzugt aus Betonrohren besteht, sanierungsbedürftig ist. Dies gilt insbesondere für die Ballungsgebiete und Großstädte. Allein in der Bundesrepublik Deutschland wird das sanierungsbedürftige Kanalrohrnetz auf mehrere Millionen Meter geschätzt. Neben einem Austausch der Kanalrohre wird aus Kostengründen vielfach eine als "Relining-Verfahren" bezeichnete Technik zur Kanalrohrsanierung angewandt. Hierbei unterscheidet man ein sogenanntes Langrohr-Relining und ein Kurzrohr-Relining. Hierbei werden in bestehende, undicht gewordene Kanalrohrleitungen, die üblicherweise aus Beton, Steinzeug, Gußeisen od.dgl. bestehen, Kunststoff-Rohre eingeschoben bzw. eingezogen. Der zwischen dem Kunststoff-Rohr und dem Kanalrohr verbleibende Hohlraum wird zur Stabilisierung und Abdichtung des Gesamt-Rohr-Systems durch eine Injektionsmasse ausgefüllt.

Beim Langrohr-Relining werden nahezu ausschließlich Hochdruck-Polyethylen-Vollwandrohre und Polypropylen-Vollwandrohre eingesetzt, die an der jeweiligen Baustelle an den produktions- bzw. transportbedingten Stoßflächen stumpf verschweißt werden. Hierzu ist es aus der US-A-4 754 781 bekanntgeworden, ein flexibles Verbundrohr einzusetzen, dessen Innen-Rohr und dessen Außen-Rohr jeweils aus sehr weichen flexiblen Kunststoffen hergestellt sein müssen, um ein Einziehen des Kunststoff-Rohres in ein bestehendes Kanalrohr zu ermöglichen, wobei das Rohr um einen sehr eigen Biegeradius biegbar sein muß. Diese extreme Biegbarkeit des Rohres ist bei gleichzeitig ausreichend hoher Scheiteldruckfestigkeit nicht erreichbar, da die Forderungen nach Flexibilität und Steifigkeit nicht miteinander vereinbar sind. Darüber hinaus ist dieses System nicht funktionsfähig, da nach dem Einbringen der Injektionsmasse und dem Ziehen um einen extrem engen Biegeradius das aus weichem Kunststoff bestehende Rohr zumindest teilweise in sich zusammenfallen wird.

Aus der EP-A2-0 275 055 (s. Oberbegriff des Anspruches 1) ist es für ein Kunststoff-Vollwandrohr bekannt, an einem Ende eine überstehende Muffe auszubilden und am anderen Ende ein im Durchmesser verringertes Spitzende auszuformen. Miteinander verbundene Rohre sind außen-bündig oder sohlengleich miteinander verbunden, weisen also auf der Außenfläche keine den Durchmesser des Rohres vergrößernden Vorsprünge auf. Derartige Vollwandrohre werden für das sogenannte Kurzrohr-Relining eingesetzt, mit dem einerseits die Nachteile des Langrohr-Relining und andererseits störende Erdarbeiten weitgehend vermieden werden. Ein wesentlicher Nachteil dieser Vollwandrohre liegt darin, daß sie zur Erzielung einer ausreichenden Scheiteldruckfestigkeit sehr schwer, also mit sehr hoher Wandstärke ausgebildet sein müssen und daß beim Einziehen oder Einschieben der Rohre aufgrund von Einbruchstellen im auszukleidenden Kanalrohr auftretende Beschädigungen zu Undichtigkeiten des Kunststoff-Rohres führen. Unabhängig von Festigkeitserwägungen muß dieses Rohr eine gewisse Mindestwanddicke aufweisen, da aus ihr an einem Ende das Spitzende und am anderen Ende das Muffenende ausgeformt werden müssen, wobei zwischen beiden gegebenenfalls noch Axialverbindungen unterbringbar sein müssen. Darüber hinaus ist dieses Rohr nur aufwendig herstellbar, da Muffenende und Spitzende entweder durch spanende Bearbeitung nachträglich hergestellt werden müssen, oder da Muffenende und Spitzende nachträglich durch Spritzgießen angeformt werden müssen.

Aus der nicht vorveröffentlichten EP-A-0 385 465 (Veröffentlichungstag 05.09.90) ist ein Verbundrohr bekannt, an dessen einem Ende eine Muffe ausgebildet ist, die durch Aufweiten des Rohres hergestellt wird. Am anderen Ende des Rohres ist ein Spitzende ausgebildet, wobei die hier vorhandenen Erhebungen einen kleineren Außendurchmesser haben als die Erhebungen des normalen Rohres. Der Außendurchmesser der Muffe ist zwingend größer als der Außendurchmesser des sonstigen Rohres. Außerdem weist die Muffe eine sich nach außen erstreckende ringförmige Erhebung zur Aufnahme eines Dichtungsringes auf. Dieses Rohr ist nicht zur Kanalrohrsanierung vorgesehen.

Aus dem Prospekt "SIROPLAN" der Hegler Plastik GmbH, D-8735 Oerlenbach, Deutschland, ist es bekannt, Verbundrohre durch Doppel-Steckmuffen miteinander zu verbinden. Die Rohre sind an ihren Enden nicht zu Spitzenden verformt. Die Doppel-Steckmuffen sind einstückig aus Kunststoff gespritzt, sind also innen und außen glattwandig, wobei ihr Innendurchmesser gleich oder etwas größer ist als der Außendurchmesser der Erhebungen der Verbundrohre.

Der Erfindung liegt die Aufgabe zugrunde, ein Kunststoffrohr der eingangs vorausgesetzten Art so auszugestalten daß es bei hoher Scheiteldruckfestigkeit geringes Gewicht und Unempfindlichkeit gegen Beschädigungen im Außenbereich aufweist und zum Kurzrohr-Relining einsetzbar ist.

Diese Aufgabe wird erfindungsgemäß dadurch gelöst, daß jedes Rohr und das jeweilige Spitzende mit ringförmigen Erhebungen versehen ist, daß der Außendurchmesser der Erhebungen des Spitzendes etwa dem Innendurchmesser der Muffe entspricht und daß die Muffe als Doppel-Steckmuffe ausgebildet ist, die in miteinander verbundenem Zustand der Rohre und der Doppel-Steckmuffe auf zwei an einer Stoßfläche gegeneinanderstoßenden Spitzenden zweier Rohre angeordnet ist.

Bei dem erfindungsgemäßen Kunststoff-Rohr kann es sich - wie im Anspruch 2 angegeben - um ein Verbundrohr oder - wie im Anspruch 3 angegeben - um ein Rippenrohr handeln. Diese Rohre weisen - bei Wahl eines ausreichend steifen bzw. starren Kunststoffes - eine hohe Scheiteldruckfestigkeit auf und sind bezogen auf diese Festigkeit sehr leicht. Bei jeweils gleichem Werkstoff und vergleichbarer Scheiteldruckfestigkeit beträgt das Gewicht eines Verbundrohres im Vergleich zu einem Vollwandrohr nur etwa 50% und das eines Rippenrohres im Vergleich zum Vollwandrohr nur etwa 70% des jeweiligen Vollwandrohres. Wenn das Kunststoff-Rohr beim Einschieben oder Einziehen in ein zu sanierendes Kanalrohr in seinem Außenbereich beschädigt wird, dann wird entweder nur der Kreisring des Verbundrohres oder eine Rippe des Rippenrohres beschädigt. Das eigentliche Rohr, d.h. das Innen-Rohr bleibt stets unbeschädigt, so daß die Gefahr von Undichtigkeiten ausgeschlossen ist. Durch die spezielle Ausgestaltung der Rippen oder Kreisringe im Bereich des Spitzendes wird eine für derartige Rohre ungewöhnliche sohlengleiche oder außen-bündige Ausgestaltung ermöglicht, so daß keine über den Außendurchmesser des Rohres in seinem Bereich zwischen Muffe bzw. Spitzende vorstehenden Hindernisse entstehen können. Derartige Verbundrohre oder Rippenrohre werden kontinuierlich auf Maschinen hergestellt, wie sie aus der DE-AS 17 04 718 (entsprechend US-PS 3 677 676) bekannt sind.

Eine Reduktion der Montagekraft kann bei der Herstellung der Muffenverbindung dadurch erreicht werden, daß bei Verbundrohren mindestens ein Kreisring mit sich radial zur Achse nach außen erstreckenden, gegen die Innenwand der Muffe anliegenden Erhöhungen versehen ist. Der gleiche vorteilhafte Effekt wird bei Rippenrohren dadurch erreicht, daß die Muffe mit radial zur Achse nach innen vorspringenden Erhöhungen versehen ist, die gegen mindestens eine Rippe anliegen.

Die Erhöhungen sind vorteilhafterweise radial elastisch verformbar.

Um eine ausreichend zugfeste Verbindung zwischen zwei benachbarten Rohren zu erreichen, ist vorteilhafterweise die Muffe mit Arretiernocken versehen, die zwischen zwei einander benachbarte ringförmige Erhebungen eines Spitzendes eingreifen.

Weitere Einzelheiten der Erfindung ergeben sich aus der nachfolgenden Beschreibung von Ausführungsbeispielen anhand der Zeichnung. Es zeigt
- Fig. 1: eine Verbindung von zwei Verbundrohren mittels einer Doppel-Steckmuffe,
- Fig. 2: einen Teil-Querschnitt durch das Verbundrohr mit Steckmuffe nach Fig. 1 entsprechend der Schnittlinie II-II in Fig. 1,
- Fig. 3: eine Verbindung von zwei Rippenrohren mittels einer Doppel-Steckmuffe,
- Fig. 4: einen Teil-Längsschnitt durch eine Verbindung von Verbundrohr mit Muffe,
- Fig. 5: einen Teil-Querschnitt durch das Verbundrohr mit Muffe nach Fig. 4 entsprechend der Schnittlinie V-V in Fig. 4,
- Fig. 6: einen Teil-Längsschnitt durch eine Verbindung von Verbundrohr mit Muffe in einer abgewandelten Ausführung,
- Fig. 7: einen Teil-Querschnitt durch die Verbindung von Verbundrohr mit Muffe nach Fig. 6 entsprechend der Schnittlinie VII-VII in Fig. 6,
- Fig. 8: einen Teil-Längsschnitt durch eine Verbindung von Verbundrohr mit Muffe in einer weiteren abgewandelten Ausführungsform,
- Fig. 9: einen Teil-Querschnitt durch die Verbindung von Verbundrohr mit Muffe nach Fig. 8 entsprechend der Schnittlinie IX-IX in Fig. 8,
- Fig. 10: einen Teil-Längsschnitt durch eine Verbindung von Rippenrohr und Muffe und
- Fig. 11: einen Teil-Querschnitt durch die Verbindung von Rippenrohr und Muffe entsprechend der Schnittlinie XI-XI in Fig. 10.

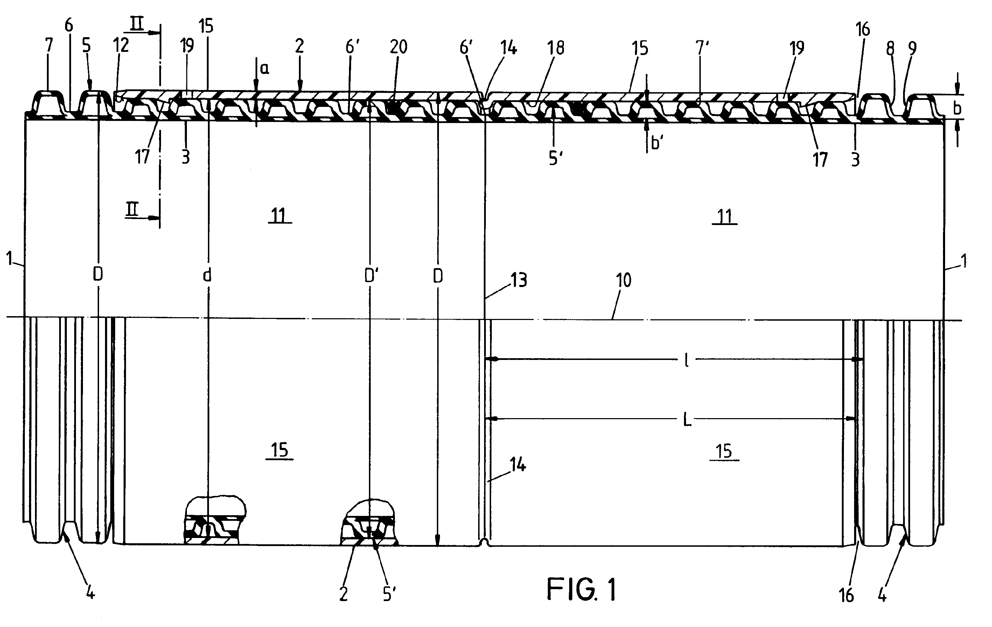

In Fig. 1 sind zwei gleich ausgebildete, einander spiegelsymmetrisch zugewandte Verbundrohre 1 dargestellt, die mittels einer Doppel-Steckmuffe 2 miteinander verbunden sind. Die Verbundrohre 1 weisen jeweils ein durchgehendes zylindrisches Innen-Rohr 3 und ein gewelltes Außen-Rohr 4 auf. Die Herstellung dieser Verbundrohre erfolgt in einer aus der DE-OS 17 04 718 (entsprechend US-PS 3 677 676) bekannten Weise, wobei die Verbindung zwischen Innen-Rohr 3 und Außen-Rohr 4 stattfindet, wenn die später das Innen-Rohr 3 bzw. das Außen-Rohr 4 bildenden warmplastischen Schläuche aus Kunststoff hinter dem Spritzkopf des Extruders zusammengeführt werden. Im Bereich zwischen zwei benachbarten Kreisringen 5 des Außen-Rohres 4, also im Bereich eines Wellentales 6, sind Innen-Rohr 3 und Außen-Rohr 4 einstückig ausgebildet.

Jeder Kreisring 5 hat - wie aus der Zeichnung hervorgeht - den Querschnitt eines sich nach außen leicht verjüngenden Trapezes, wobei dieser Trapez-Querschnitt außen durch einen ringzylindrischen Außenwand-Abschnitt 7 und seitlich durch zwei Seitenwand-Abschnitte 8,9 begrenzt wird, die - bezogen auf die Mittel-Längs-Achse 10 des jeweiligen Verbundrohres 1 - radial nach außen aufeinander zu geneigt sind. Die Basis des Trapezes wird durch das jeweilige Innen-Rohr 3 gebildet.

Jedes Verbundrohr 1 weist ein sogenanntes Spitzende 11 auf, bei dem es sich um den Endabschnitt des Verbundrohres 1 handelt, der in die Doppel-Steckmuffe 2 eingeschoben wird.

Das Verbundrohr 1 hat in seinem Bereich jeweils jenseits des Spitzendes 11 einen Außendurchmesser D, der gleich dem Außendurchmesser D der Doppel-Steckmuffe 2 ist. Die Doppel-Steckmuffe 2 ist ringzylindrisch ausgebildet und hat eine Wanddicke a. Für ihren Innendurchmesser d gilt also d = D -2a.

Der Außendurchmesser D' des jeweiligen Spitzendes 11 ist ungefähr gleich dem Innendurchmesser d der Steckmuffe 2, so daß die Steckmuffe 2 zwar noch auf das jeweilige Spitzende 11 aufgeschoben werden kann, anschließend aber spielfrei auf diesem sitzt.

Um das Zusammenschieben von Spitzende 11 und Steckmuffe 2 zu erleichtern, weist die Steckmuffe 2 an jedem Ende eine Einführ-Schrägfläche 12 auf. Im Bereich der Stoßfläche 13 der beiden Verbundrohre 1, also dort, wo diese beiden stumpf gegeneinanderstoßen, weist die Steckmuffe 2 einen umlaufenden radial nach innen gerichteten Anschlag 14 auf, der in das an der Stoßfläche 13 gebildete Wellental 6' hineinragt. Hiermit wird die Position jedes Spitzendes 11 relativ zur Steckmuffe 2 festgelegt. Wie der Fig. 1 entnehmbar ist, entspricht die Länge L eines zwischen dem Anschlag 14 und dem Ende der Steckmuffe 2 ausgebildeten Abschnittes 15 der Steckmuffe 2 der Länge l eines Spitzendes 11, so daß die Steckmuffe 2 nicht nur aufgrund der gleichen Durchmesser D außen-bündig mit dem jeweiligen Verbundrohr 1 liegt, sondern auch höchstens ein montagebedingter Spalt 16 zwischen dem Ende der Steckmuffe 2 und dem ersten Kreisring 5 des Verbundrohres 1 ausgebildet ist, dessen axiale Erstreckung kleiner ist als der axiale Abstand der einander zugewandten Seitenwand-Abschnitte 8,9 zweier benachbarter Kreisringe 5.

Wie die Zeichnung erkennen läßt, sind die Kreisringe 5' am jeweiligen Spitzende 11 dickwandiger ausgebildet als die Kreisringe 5 im Bereich des Verbundrohres 1 jenseits des Spitzendes 11. Dies liegt an der eingangs angesprochenen kontinuierlichen Produktionstechnik, wonach in den Kreisringen 5 und 5' jeweils die gleiche Menge Kunststoff enthalten ist. Aufgrund der deutlich geringeren Höhe b' der Kreisringe 5' im Vergleich zur Höhe b der Kreisringe 5 sind die Kreisringe 5' dickwandiger ausgebildet.

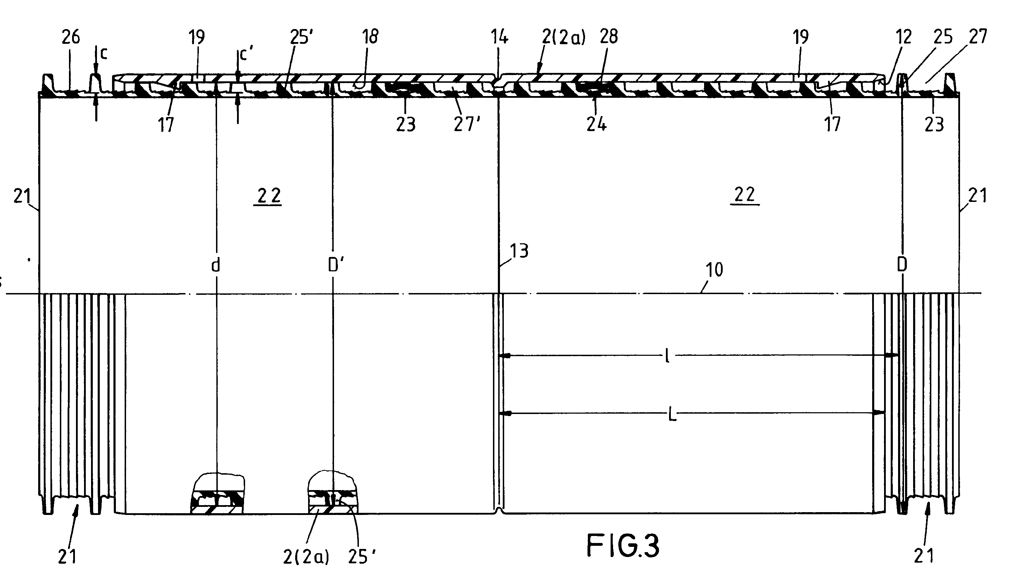

Um eine zugfeste Verbindung zwischen dem jeweiligen Abschnitt 15 der Steckmuffe 2 und dem zugeordneten Spitzende 11 des jeweiligen Verbundrohres 1 herzustellen, sind an der Steckmuffe 2 Arretiernocken 17 ausgebildet, die von der zylindrischen Innenwand 18 der Steckmuffe 2 radial nach innen vorspringen, so daß sie nach dem Aufschieben eines Abschnittes 15 der Steckmuffe 2 auf ein Spitzende 11 elastisch in ein Wellental 6' zwischen zwei benachbarten Kreisringen 5' einrasten. Derartige Arretiernocken 17 können bei der Herstellung der Steckmuffe 2 mit angespritzt werden oder aber nachträglich ausgeformt werden. Wie Fig. 2 erkennen läßt, ist es möglich, in der Umfangsebene, in der die Arretiernocken 17 jeweils angebracht sind, Schlitze 19 in der Steckmuffe 2 auszubilden, die beim Aufschieben der Steckmuffe 2 auf das Spitzende 11 ein radiales Nachgeben der Arretierungsnocken 17 ermöglichen, damit die Arretiernocken 17 über die Außenwandabschnitte 7' der Kreisringe 5' hinweggeschoben werden können. Wie Fig. 1 erkennen läßt, ist in mindestens einem Wellental 6' jedes Spitzendes 11 ein Profildichtring 20 angeordnet, der eine dichte Verbindung zwischen Steckmuffe 2 und Spitzende 11 herstellt. Derartige Dichtungen sind beispielsweise aus der EP-B1-0 012 166 (entsprechend US-PS 4 304 415) bekannt.

In dem Ausführungsbeispiel nach Fig. 3 sind zwei Rippenrohre 21 dargestellt, die mit ihren Spitzenden 22 stumpf gegeneinanderstoßen und mittels einer Doppel-Steckmuffe 2 miteinander verbunden sind, die identisch der Doppel-Steckmuffe 2 des Ausführungsbeispiels nach den Fig. 1 und 2 ausgebildet ist. Ein solches Rippenrohr 21 weist ein im wesentlichen zylindrisches Rohr 23 auf, dessen Innenwand 24 gleichermaßen wie bei dem Verbundrohr 1 zylindrisch glatt ist. An seiner Außenseite weist das Rohr 23 radial nach außen ragende ringförmige Rippen 25 auf. Diese Rippen 25 haben - wie aus Fig. 3 hervorgeht - einen sich nach außen verjüngenden Trapezquerschnitt. Zwischen den benachbarten Rippen 25 sind an der Außenwand des Rohres 23 Ring-Erhebungen 26 ausgebildet. Die Herstellung dieser Rippenrohre ist im wesentlichen aus der EP-A2-0 301 189 (entsprechend US-Serial No. 07/227 189) bekannt.

Wie aus Fig. 3 erkennbar ist, weisen die Rippen 25' im Bereich des jeweiligen Spitzendes eine geringere Höhe c' auf als die Rippen 25 außerhalb des jeweiligen Spitzendes 22. Hier haben die Rippen 25 eine Höhe c. Der Grund hierfür liegt ebenfalls in der kontinuierlichen Produktionstechnik, wie dies oben bereits geschildert wurde. Zwischen benachbarten Rippen 25 sind Rillen 27 ausgebildet. In mindestens jeweils einer Rille 27' zwischen zwei benachbarten Rippen 25' des jeweiligen Spitzendes 22 ist eine Ringdichtung 28 angeordnet, die eine dichte Verbindung zwischen der Innenwand 18 der Doppelsteckmuffe 2 und dem jeweiligen Spitzende 22 gewährleistet.

Für die Durchmesserverhältnisse gelten die obigen Ausführungen; aus diesem Grunde sind auch mit den Durchmesserbezeichnungen in den Fig. 1 und 2 identische Bezeichnungen für Fig. 3 gewählt worden. Die Arretiernocken 17 der Steckmuffe 2 legen sich jeweils hinter eine Rippe 25' in eine entsprechend zugeordnete Rille 27' des jeweiligen Spitzendes 22.

Bei den Ausführungsbeispielen nach den Fig. 1 und 3 ist jedes Verbundrohr 1 bzw. jedes Rippenrohr 21 an beiden Enden mit einem Spitzende 11 bzw. 22 versehen.

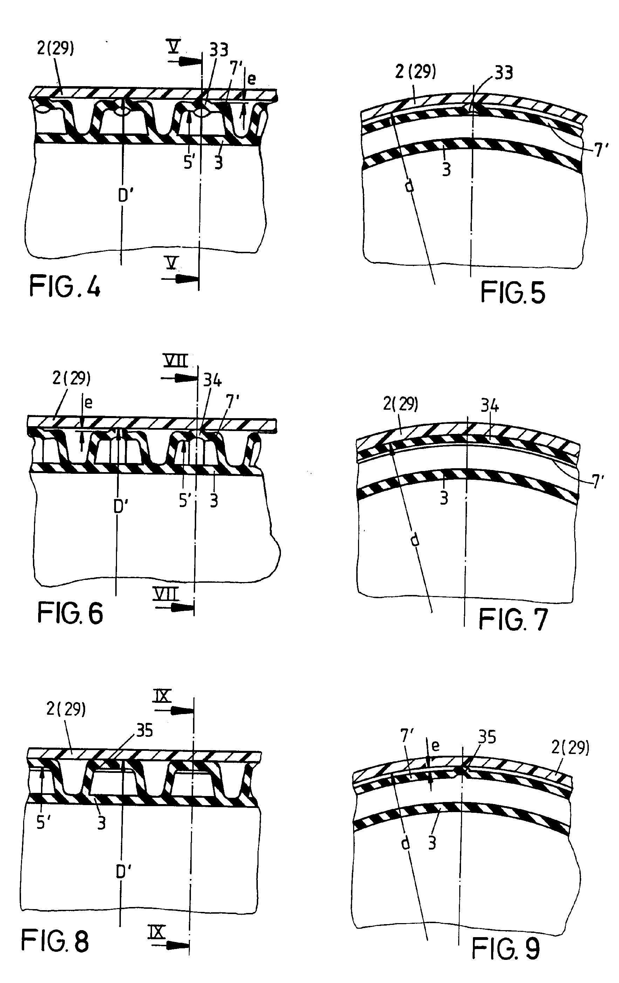

In den Fig. 4 bis 9 sind verschiedene Möglichkeiten dargestellt, um die Montagekraft bei der Herstellung der Muffenverbindung, d.h. beim Zusammenschieben des Spitzendes mit der Muffe, zu reduzieren. Bei den Verbundrohren kann dies durch eine spezielle Gestaltung der Kreisringe in der Weise geschehen, daß diese nur eine Punkt- oder Linienberührung zur Innenwand der Steckmuffe 2 oder gleichermaßen einer Muffe 29 aufweisen. Hierdurch wird gleichzeitig aber eine genaue Zentrierung von Muffe 2 und Spitzende 11 beibehalten.

In der Ausgestaltung nach den Fig. 4 und 5 ist der Außenwand-Abschnitt 7' mit über den Umfang verteilten noppenförmigen Erhöhungen 33 versehen. Der Außendurchmesser D' wird hierbei von der Erhöhung 33 aus gemessen.

Bei der Ausführungsform nach den Fig. 6 und 7 ist der Außenwand-Abschnitt 7' jeweils mit einer ringförmig umlaufenden flachen Erhöhung 34 versehen, die aus dem Außenwand-Abschnitt 7' ausgeformt ist. Im Gegensatz zur Ausgestaltung nach den Fig. 4 und 5, wo lediglich eine (angenäherte) Punktberührung zwischen den Erhöhungen 33 und der Innenwand 18 der Muffe 2 erfolgt, liegt hier eine linienförmige Berührung vor.

Bei der Ausgestaltung nach Fig. 8 und 9 ist auf den zylindrischen Außenwand-Abschnitten 7' jeweils eine sich parallel zur Achse 10 erstreckende, linienförmige axiale Erhöhung 35 ausgebildet.

Bei den Ausgestaltungen nach den Fig. 4 bis 9 kann - bei noch nicht erfolgter Montage von Spitzende 11 und Muffe 2 - der Außendurchmesser D' des Spitzendes 11 jeweils geringfügig größer sein als der Innendurchmesser d der Muffe 2. Wenn die Höhe der jeweiligen Erhöhung 33,34,35 über die Außenseite des Außenwand-Abschnitts 7' mit e bezeichnet wird, dann kann hier als gelten D' > d > D' - 2e. In diesem Bereich erfolgt eine elastische Verformung der Kreisringe 5'. Für das Verhältnis des Innendurchmessers d der Steckmuffe 2 bzw. der angeformten Muffe 29 zur Höhe e der Erhöhungen 33,34,35 gilt 0,002 d ≦ e ≦ 0,004 d, wobei diese Maße für eine noch nicht montierte Muffe und ein noch nicht montiertes Spitzende gelten.

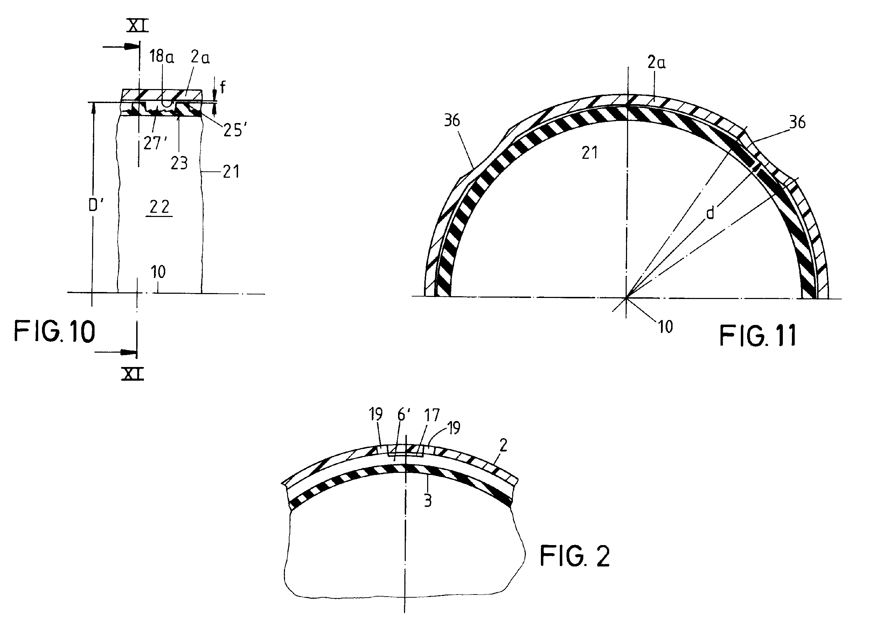

Wenn die Montagekraft bei einem Rippenrohr 21 reduziert werden soll, dann kann hierfür eine Ausgestaltung nach den Fig. 10 und 11 vorgesehen werden. In diesem Fall ist die Muffe 2a, bei der es sich einerseits um eine Doppel-Steckmuffe und andererseits ebenfalls um eine angeformte Muffe handeln kann, mit parallel zur Längsachse 10 durchgehend verlaufenden Sicken, also radial nach innen gerichteten Erhöhungen 36 versehen. Diese stehen radial von der Innenwand 18a der Muffe 2a um ein Maß f vor. Der Außendurchmesser D' des Spitzendes 22, also der Außendurchmesser der Rippen 25' ist in diesem Fall etwas größer als der von den Erhöhungen 36 aus gemessene Innendurchmesser d der Muffe 2a. Auch hier gilt die Beziehung d + 2f > D' > d. Für die Höhe f der Erhöhungen 36 im Vergleich zum Innendurchmesser d der Muffe 2a gilt 0,002 d ≦ f ≦ 0,004 d, wobei die vorstehend angegebenen Maße jeweils für eine nicht montierte Muffe 2a und entsprechend ein noch nicht montiertes Spitzende 22 gelten.

Als Werkstoffe insbesondere für Verbundrohre kommen PE-HD (Hochdruck-Polyethylen) und PP (Polypropylen) in Betracht, wobei das Innen-Rohr 3 und das Außen-Rohr 4 aus demselben Werkstoff hergestellt werden. Für Rippenrohre kommt primär PVC-U (Hart-Polyvinylchlorid) in Betracht.

Wichtig bei der Wahl des Werkstoffes und der Dimensionierung der Rohre und der Muffen ist, daß die Rohre eine hohe Scheiteldruckfestigkeit einerseits und eine hohe axiale Festigkeit andererseits aufweisen, damit sie einerseits ihrer Auskleidungsfunktion gerecht werden und andererseits auch in vorhandene Kanalrohre unter Druck eingeschoben werden können.

Obwohl die geschilderten Rohre primär für die Kanalrohrsanierung konzipiert und einsetzbar sind, ist die sohlengleiche, d.h. außenbündige, Verbindung auch an anderen Stellen in vorteilhafter Weise anwendbar. Dies gilt beispielsweise für die Basisentwässerung von Mülldeponien im Bereich der Deponieabdichtung. In diesem Fall wären die geschilderten Rohre mit Perforationen zu versehen, also als Sickerrohre auszubilden.

## Patentansprüche

1. Rohr-Bausatz zur Kanalrohrsanierung, bestehend aus mindestens zwei Kunststoff-Rohren (1, 21) und mindestens einer Muffe (2, 2a) zur Verbindung der Rohre (1, 21), wobei jedes Rohr (1, 21) mindestens ein Spitzende (11, 22) aufweist, dessen Außendurchmesser (D') kleiner ist als der Außendurchmesser (D) des Rohres (1, 21), wobei der Außendurchmesser (D) der Muffe (2, 2a) im wesentlichen gleich dem Außendurchmesser (D) der Rohre (1, 21) ist, wobei der Innendurchmesser (d) der Muffe (2, 2a) etwa gleich dem Außendurchmesser (D') jedes Spitzendes (11, 22) ist und wobei die Rohre (1, 21) und die Muffe (2, 2a) in miteinander verbundenem Zustand eine gemeinsame Mittel-Längs-Achse (10) aufweisen, dadurch gekennzeichnet, daß jedes Rohr (1, 21) und das jeweilige Spitzende (11, 22) mit ringförmigen Erhebungen, z.B. Kreisringen oder Rippen (5, 5', 25, 25') versehen ist, daß der Außendurchmesser (D') der Erhebungen (5', 25') des Spitzendes (11, 22) etwa dem Innendurchmesser (d) der Muffe (2, 2a) entspricht und daß die Muffe als Doppel-Steckmuffe (2, 2a) ausgebildet ist, die in miteinander verbundenem Zustand der Rohre (1, 21) und der Doppel-Steckmuffe (2, 2a) auf zwei an einer Stoßfläche (13) gegeneinanderstoßenden Spitzenden (11, 22) zweier Rohre (1, 21) angeordnet ist.

2. Rohr-Bausatz nach Anspruch 1, dadurch gekennzeichnet, daß das Rohr als Verbundrohr (1) aus einem Innen-Rohr (3) und einem mit Kreisringen (5,5') versehenen Außen-Rohr (4) ausgebildet ist, wobei der Außendurchmesser (D') der Kreisringe (5') des Spitzendes (11) etwa dem Innendurchmesser (d) der Muffe (2,2a) entspricht.

3. Rohr-Bausatz nach Anspruch 1, dadurch gekennzeichnet, daß das Rohr als Rippenrohr (21) ausgebildet ist, das aus einem Rohr (23) und an dessen Außenseite angeformten ringförmig umlaufenden Rippen (25,25') besteht, wobei der Außendurchmesser (D') der Rippen (25') des Spitzendes (22) etwa dem Innendurchmesser (d) der Muffe (2,2a) entspricht.

4. Rohr-Bausatz nach Anspruch 2, dadurch gekennzeichnet, daß mindestens ein Kreisring (5') mit sich radial zur Achse (10) nach außen erstreckenden, gegen die Innenwand (18) der Muffe (2,29) anliegenden Erhöhungen (33,34,35) versehen ist.

5. Rohr-Bausatz nach Anspruch 3, dadurch gekennzeichnet, daß die Muffe (2a) mit radial zur Achse (10) nach innen vorspringenden Erhöhungen (36) versehen ist, die gegen mindestens eine Rippe (25') anliegen.

6. Rohr-Bausatz nach Anspruch 4 oder 5, dadurch gekennzeichnet, daß die Erhöhungen (33,34,35,36) radial elastisch verformbar sind.

7. Rohr-Bausatz nach Anspruch 4, dadurch gekennzeichnet, daß für die radiale Höhe (e) der Erhöhungen (33,34,35) bezogen auf den Außendurchmesser (D') des Spitzendes (11) und den Innendurchmesser (d) der Muffe (2,29) gilt: D' > d > D' - 2e.

8. Rohr-Bausatz nach Anspruch 5, dadurch gekennzeichnet, daß für die radiale Höhe (f) der Erhöhungen (36) in Bezug auf den Außendurchmesser (D') des Spitzendes (22) und in Bezug auf den Innendurchmesser (d) der Muffe (2a) gilt: d + 2f > D' > d.

9. Rohr-Bausatz nach Anspruch 1, dadurch gekennzeichnet, daß die Muffe (2,2a) mit Arretiernocken (17) versehen ist, die zwischen zwei einander benachbarten ringförmigen Erhebungen (5',25') eines Spitzendes (11,22) zur Herstellung einer zugfesten Verbindung eingreifen.

## Claims

1. Pipe kit for sewer pipe reconstruction comprising at least two plastic pipes (1, 21) and at least one socket end (2, 2a) for the purpose of connecting the pipes (1, 21), each pipe (1, 21) having at least one spigot (11, 22), the outer diameter (D') of which is smaller than the outer diameter (D) of the pipe (1, 21), the outer diameter (D) of the socket end (2, 2a) being substantially equal to the outer diameter (D) of the pipes (1, 21), the inner diameter (d) of the socket end (2, 2a) being approximately equal to the outer diameter (D') of each spigot (11, 22) and the pipes (1, 21) and the socket end (2, 2a) comprising a common central longitudinal axis (10) in an interconnected condition, characterized in that each pipe (1, 21) and the respective spigot (11, 22) are provided with annular protrusions e.g. annular rings or ribs (5, 5', 25, 25'), in that the outer diameter (D') of the protrusions (5', 25') of the spigot (11, 22) corresponds approximately to the inner diameter (d) of the socket end (2, 2a) and in that the socket end is formed as a double plug-in socket (2, 2a), which in an interconnected condition of the pipes (1, 21) and the double plug-in socket (2, 2a) is arranged on two spigots (11, 22) of two pipes (1, 21), the spigots (11, 22) thrusting against each other on a thrust surface (13).

2. Pipe kit according to claim 1, characterized in that the pipe is a composite pipe (1) comprising an inner pipe (3) and an outer pipe (4) provided with annular rings (5, 5'), the outer diameter (D') of the annular rings (5') of the spigot (11) corresponding approximately to the inner diameter (d) of the socket end (2, 2a).

3. Pipe kit according to claim 1, characterized in that the pipe is a ribbed pipe (21) which consists of a pipe (23) having annularly surrounding ribs (25, 25') on its outside, the outer diameter (D') of the ribs (25') of the spigot (22) corresponding approximately to the inner diameter (d) of the socket end (2, 2a).

4. Pipe kit according to claim 2, characterized in that at least one annular ring (5') is provided with protrusions (33, 34, 35) extending outwards radially to the axis (10) and bearing against the inner wall (18) of the socket end (2, 29).

5. Pipe kit according to claim 3, characterized in that the socket end (2a) is provided with protrusions (36) projecting inwards radially to the axis (10) which bear against at least one rib (25').

6. Pipe kit according to claim 4 or 5, characterized in that the protrusions (33, 34, 35, 36) are radially elastically deformable.

7. Pipe kit according to claim 4, characterized in that for the radial height (e) of the protrusions (33, 34, 35) with respect to the outer diameter (D') of the spigot (11) and to the inner diameter (d) of the socket end (2, 29) the following applies: D' > d > D' - 2e.

8. Pipe kit according to claim 5, characterized in that for the radial height (f) of the protrusions (36) with respect to the outer diameter (D') of the spigot (22) and with respect to the inner diameter (d) of the socket end (2a) the following applies: D + 2f > D' > d.

9. Pipe kit according to claim 1, characterized in that the socket end (2, 2a) is provided with stop cams (17) which, for the provision of a connection of tensile strength, engage between two adjacent annular protrusions (5', 25') of a spigot (11, 22).

## Revendications

1. Lot d'éléments tubulaires destiné à la rénovation de conduits d'égout, comprenant au moins deux tuyaux en matière plastique (1, 21) et au moins un manchon (2, 2a) pour relier les tuyaux (1, 21), chaque tuyau (1, 21) comportant au moins une extrémité conique (11, 22) dont le diamètre extérieur (D') est inférieur au diamètre extérieur (D) du tuyau (1, 21), le diamètre extérieur (D) du manchon (2, 2a) étant sensiblement égal au diamètre extérieur (D) des tuyaux (1, 21), le diamètre intérieur (d) du manchon (2, 2a) étant sensiblement égal au diamètre extérieur (D') de chaque extrémité conique (11, 22), et les tuyaux (1, 21) et le manchon (2, 2a) possédant un axe longitudinal médian commun (10) lorsqu'ils sont reliés entre eux, caractérisé en ce que chaque tuyau (1, 21) et les extrémités coniques correspondantes (11, 22) sont pourvus de surépaisseurs annulaires (ex. anneaux ou nervures) (5, 5', 25, 25'), en ce que le diamètre extérieur (D') des surépaisseurs (5', 25') de l'extrémité conique (11, 22) correspond sensiblement au diamètre intérieur (d) du manchon (2, 2a), et en ce que le manchon est conçu sous la forme d'un double manchon emboîtable (2, 2a) qui, lorsqu'il est assemblé avec les tuyaux (1, 21), repose sur deux extrémités coniques (11, 22) de deux tuyaux (1, 21), lesdites extrémités coniques (11, 22) étant aboutées par leurs faces frontales (13).

2. Lot d'éléments tubulaires selon la revendication 1, caractérisé en ce que le tuyau est conçu sous la forme d'un tuyau composite (1) constitué d'un tuyau intérieur (3) et d'un tuyau extérieur (4) muni d'anneaux (5, 5'), le diamètre extérieur (D') des anneaux (5') de l'extrémité conique (11) correspondant sensiblement au diamètre intérieur (d) du manchon (2, 2a).

3. Lot d'éléments tubulaires selon la revendication, caractérisé en ce que le tuyau est conçu sous la forme d'un tuyau nervuré (21) qui est constitué d'un tuyau (23) et de nervures périphériques annulaires (25, 25') moulées sur son côté extérieur, le diamètre extérieur (D') des nervures (25') de l'extrémité conique (22) correspondant sensiblement au diamètre intérieur (d) du manchon (2, 2a).

4. Lot d'éléments tubulaires selon la revendication 2, caractérisé en ce que au moins un anneau (5') est muni de surépaisseurs (33, 34, 35) qui s'étendent vers l'extérieur radialement à l'axe (10) et qui prennent appui contre la paroi intérieure (18) du manchon (2, 29).

5. Lot d'éléments tubulaires selon la revendication 3, caractérisé en ce que le manchon (2a) est muni de surépaisseurs (36) qui font saillie vers l'intérieur radialement à l'axe (10) et qui sont appliquées contre au moins une nervure (25').

6. Lot d'éléments tubulaires selon la revendication 4 ou 5, caractérisé en ce que les surépaisseurs (33, 34, 35, 36) sont déformables élastiquement dans le sens radial.

7. Lot d'éléments tubulaires selon la revendication 4, caractérisé en ce que, pour la hauteur radiale (e) des surépaisseurs (33, 34, 35) par rapport au diamètre extérieur (D') de l'extrémité conique (11) et au diamètre intérieur (d) du manchon (2, 29), on a : D' > d > D' - 2e.

8. Lot d'éléments tubulaires selon la revendication 5, caractérisé en ce que, pour la hauteur radiale (f) des surépaisseurs (36) par rapport au diamètre extérieur (D') de l'extrémité conique (22) et au diamètre intérieur (d) du manchon (2a), on a : d + 2f > D' > d.

9. Lot d'éléments tubulaires selon la revendication 1, caractérisé en ce que le manchon (2, 2a) est muni de crans d'arrêt (17) qui s'engagent entre deux surépaisseurs annulaires voisines (5', 25') d'une extrémité conique (11, 22) pour réaliser une liaison résistante à la traction.
